# EUROPEAN PATENT SPECIFICATION

(11) **EP 1 284 943 B1**
(45) Date of publication and mention of the grant of the patent: **13.12.2006**
(21) Application number: 01921598.7
(22) Date of filing: 17.04.2001
(51) Int. Cl.: C04B 38/06, B28B 3/20

(54) **EXTRUSION OF CERAMIC COMPOSITIONS AND CERAMIC COMPOSITION THEREFOR**
STRANGPRESSEN VON KERAMISCHEN ZUSAMMENSETSUNGEN UND KERAMISCHE ZUSAMMENSETSUNG DAFÜR
EXTRUSION DE COMPOSITIONS CERAMIQUES ET COMPOSITION CERAMIQUE PREVUE A CET EFFET

(30) Priority: 18.04.2000 GB 0009731
(43) Date of publication of application: 26.02.2003
(73) Proprietor: M-I Drilling Fluids UK Limited, Aberdeen AB11 6DB (GB)
(72) Inventor: Sambrook, Rodney Martin, Chesterfield S40 4DN (GB); Austin, Wayne, Crookes Sheffield S10 1GS (GB); Yin, Yan, Sheffield S12 4UY (GB)
(74) Representative: Symons, Rupert Jonathan
(86) International application number: PCT/GB2001/001714
(87) International publication number: WO 2001/079139

(56) References cited:
- EP-A- 0 650 944
- WO-A-98/43927
- PATENT ABSTRACTS OF JAPAN vol. 1998, no. 10, 31 August 1998 (1998-08-31) & JP 10 130073 A (SHIGA PREF GOV), 19 May 1998 (1998-05-19)
- PATENT ABSTRACTS OF JAPAN vol. 018, no. 186 (M-1585), 30 March 1994 (1994-03-30) & JP 05 345305 A (TOYOTA MOTOR CORP), 27 December 1993 (1993-12-27)
- DATABASE WPI Section Ch, Week 199619 Derwent Publications Ltd., London, GB; Class A88, AN 1996-184599 XP002161897 & JP 08 059367 A (KOREA RES INST CHEM TECHNOLOGY), 5 March 1996 (1996-03-05)
- PATENT ABSTRACTS OF JAPAN vol. 1999, no. 08, 30 June 1999 (1999-06-30) & JP 11 071188 A (NORITAKE CO LTD), 16 March 1999 (1999-03-16)

## Description

Extrusion is a widely used ceramic shaping technique for mass production of ceramic articles with a substantially constant cross-section. Examples of such articles are tubes, bricks, tiles, primary and secondary kiln furniture, catalyst supports, electronic components (capacitors, insulators and magnets), heat-exchanger parts; and the like. To ensure the extrudates (that is, the extrusion products) can self-support without deformation the ceramic mixture to be extruded must be highly viscous and stiff. The pressure applied in the extrusion of viscous stiff ceramic mixtures must therefore be correspondingly high.

Extrusion of ceramic pastes causes mechanical wear of the extrusion equipment especially when highly abrasive ceramic materials such as mullite and alumina are extruded. Extrusion dies need to be replaced frequently if the dimensional accuracy of the extrudates is to be maintained.

It is one object of this invention to provide a method of extruding a ceramic composition at relatively low pressures. More particularly the invention relates to extrusion of such mixtures to produce porous extrudates.

According to the invention in one aspect there is provided a method of extruding a ceramic composition in an extruder, the method comprising extruding at an extrusion pressure below about 0.04 MPa a ceramic paste composition containing particles of a ceramic material, at least one binder and at least one dispersant, and a cushioning agent comprising thermoplastics spheres having a bulk modulus of elasticity of about 0.1 MPa to about 4MPa, and being present in the range of 10 - 95 v/v%.

In another aspect the invention provides an extrudable ceramic paste composition comprising a liquid carrier containing particles of a ceramic material, at least one binder and at least one dispersant, and a cushioning agent in the form of thermoplastics spheres having a bulk modulus of elasticity of about 0.1 MPa to about 4MPa and being present in the range of 10 to 95 v/v%.

It has been discovered according to the invention that to achieve the extrusion pressure reduction and lubrication effect, the bulk compressive elasticity, measured as bulk modulus of elasticity, of the cushioning agent should be in the range between about 0.1 MPa and about 4 MPa, preferably in the range between about 0.2 MPa and about 1 MPa. If the elasticity is below the minimum value then no cushioning effect will take place, whereas if the maximum value is exceeded the cushioning effect will fade away. If the modulus is too low, the thermoplastics spheres may collapse during extrusion and cause reduced porosity in the final products. On the other hand, if the modulus is too high the pressure reduction effect will be minimal. The bulk compressive elasticity is measured at ambient temperature in a 50mm diameter cylinder and piston arrangement with temperature control. A mechanical testing machine simultaneously records the compressive load, also called compressive stress, and displacement of the piston. The modulus is defined as stress divided by strain and is measured as MPa. The strain is defined as the fraction of the height changed under load against the original height.

WO 98/43927 discloses that the addition of pliable hollow organic spheres to a suspension containing ceramic particles will result in an article which is strong and porous. The spheres may be acrylic. The strength is attributed to the fact that the spheres deform when the ceramic matrix contracts during drying. The bulk modulus of elasticity of the spheres is not discussed. The article may be shaped in a variety of ways including extrusion but the extrusion pressure is not mentioned.

Our investigations suggest that the primary function of the cushioning agent is to cushion or buffer the extrusion pressure or force when the paste is passing through the extrusion die. It is preferred that the cushioning agent be of a certain size. The isotropic construction of the cushioning agent will offer a substantially uniform cushion effect during extrusion. The particle size of the cushioning agent should be less than 2mm, and preferably from about 0.1 to 500 microns, and most preferably in the range between 5 and 200 microns. Larger size limits the volumes that can be effectively employed in the formulation and has a tendency to cause defects and reduced mechanical properties of the fired product. Larger size cushioning agents also have a tendency to break down during extrusion.

Because the cushioning agent is thermoplastic it is possible to fine control the extrusion process by temperature adjustment.

The thermoplastic spheres may be solid, hollow or foamed with micro-porosity, the hollow thermoplastic spheres being most preferred. In the case of foamed thermoplastic spheres, the expansion ratio (size after expansion divided by size before expansion) should be in the range between 10 to 40, preferably between 20 and 30. To reduce the risk of chemical contamination of the products the composition of the thermoplastic spheres should be preferably free from alkali metals, phosphorous, calcium, magnesium, chlorine, sulphur, silicon, and other metal ions. From the environmental point of view the chemical composition of the thermoplastic spheres should preferably be free from ammonia, chlorine, sulphur and other nitrogen containing amino-groups.

The thermoplastic spheres should have a moderate to high softening and melting point. The softening temperature means the temperature at which the compressive elasticity of the thermoplastic spheres reduces by 20% of its nominal value. The melting temperature means the temperature at which the thermoplastic spheres start to collapse and a zero or negative compressive elasticity is observed. Preferably the softening temperature is higher than about 100°C. More preferably the softening point is higher than about 120°C and most preferably the softening point is higher than about 150°C. If the softening temperature is too low, the subsequent drying of the extrudates will be limited to ambient temperature and the drying efficiency is reduced. If the softening temperature is around or only slightly higher than 100°C, the temperature range of the capillary action of the liquid medium will overlap the softening of the thermoplastic spheres. This overlap will facilitate the consolidation and repositioning of the ceramic particles and cause reduced porosity in the final products. The temperature difference between softening and melting should be more than 50°C because a greater difference will cause less pore closures during firing and hence higher porosity and higher pore-interconnection of the final products.

The thermoplastic spheres preferably have a relatively low coefficient of thermal expansion. This may be achieved by selection of a combination of different types and concentrations of monomers to form co- or ter- polymer spheres. (As mentioned above, the diameter / wall thickness ratio for the hollow spheres and expansion ratio for the foamed spheres should also be carefully controlled to make the mean thermal expansion coefficient of the sphere bulk comparable to that of the matrix ceramic powder).

Thermoplastic hollow spheres may be prepared from homopolymers, copolymers, terpolymers and block polymers synthesised from commercially available monomers. Examples of monomers are acrylic acid, methacrylic acid, crotonic acid, acrylamide, alkylacrylate, alkylmethyacrylate, lactic acid, acrylonitrile, styrene, ethylene oxide, ethyleneglycol, hydroxyalkyl-methacrylate, cyanoacrylate, N-substituted acrylamides, isocyanates, divinyl benzene, vinyl chloride, ureaformaldehyde, vinylidene and vinylidene chloride. Polyesters are also suitable for the preparation of hollow thermoplastic spheres. Polyesters may be synthesised by esterification with aliphatic type carboxylic acids such as carbonic, oxalic, succinic, alutaric, adipic, pimelic and sebacic acids, with phthalic acid, with isophthaloyl chloride, terephthalic acid and dimethyl sebacate. Preparation techniques based on those disclosed in US-A-3615972, US-A-4843104 and US-A-5547656 may be used in preparing the hollow thermoplastic spheres. Hollow thermoplastic spheres are commercially available.

The thermoplastic hollow spheres preferably have a dry bulk density less than 0.6g/ml, and more preferably less than 0.1. A preferred bulk density is about 0.02 to 0.08 for the spheres with diameters in the range 10-200 µm. To achieve the required elasticity the thermoplastic hollow spheres preferably have a dry bulk density less than 0.6g/ml, and more preferably less than 0.1. A preferred bulk density is about 0.02 -0.08 for the spheres with diameters in the range 10-200µm. To achieve the required elasticity, for vinylidene acrylonitrile copolymer based hollow spheres the diameter to wall thickness ratio should be in the range between 30 and 100, more preferably in the range between 40 and 60. This ratio should also be adjusted to make the mean thermal expansion coefficient of the sphere bulk comparable to that of the ceramic powder.

The foamed spheres may be prepared in a similar way as the hollow spheres but without a blowing agent. Foamed thermoplastic spheres may be obtained from commercial sources.

It is preferred that the thermoplastic spheres are somewhat hydrophilic, that is, the spheres can be easily wetted and may absorb a slight amount of water. This wettability significantly improves the uniform distribution of spheres within the ceramic paste. Surface treatment may be necessary if the spheres selected are hydrophobic. One example of such surface activity treatment is to coat the thermoplastic spheres with aqueous aluminium nitrate solution (10 to 20% concentration). Once coated with the nitrate the thermoplastic spheres will have the similar surface properties to those of alumina. The foamed thermoplastic spheres may be subjected to other treatments to modify their water affinity properties. It is preferable that the foamed thermoplastic spheres are hydrophilic on the surface but do not absorb excess water into the microporosity during the paste preparation. If excess water is retained in the mixture, water migration may become a problem during extrusion. This extra water squeezed out of the foamed thermoplastic spheres will cause a local increase of the 'effective' water content when the paste is being extruded. This lowered solids loading of the mixture will subsequently reduce the extrudates' green strength. Diffusion of the excess water to the surface of the extrudates also creates geometrical defects. The treatment may be carried out separately or with other additives during ceramic mixture preparation. Treatment may be using aqueous solutions of cellulose derivatives, or aqueous solutions of cellulose derivatives and polyvinyl alcohol. The cellulose derivatives may be selected from those water soluble ones with nonionic side groups such as cellulose, methyl cellulose, hydroxyethyl cellulose and hydroxypropyl methyl cellulose. Carboxymethyl cellulose may also be used but is less preferred. The concentration of the solutions should be in the range between 0.1 and 2 weight percent, more preferably in the range between 0.2 and 0.5 percent. The molecular weight of these cellulose derivatives should be within the range between 20,000 and 500,000 with a more preferred range between 50,000 and 150,000. The variation of degree of substitutions of the methoxyl or hydroxypropyl groups for the methyl groups in methyl cellulose polymers will not affect the functioning of the solution in the present invention. The cellulose derivatives can be obtained commercially.

Both cushioning agent (and other agents) may be solution treated to coat an active chemical or chemicals onto their surface to locally modify the chemical or mineralogical composition of the fired porous extrudates. This is particularly useful if the applications of these extrudates are in the fields of catalyst, infiltration and high temperature insulation. An active catalyst material or its precursor, e.g. salt, may be uniformly coated onto the filler surface and subsequently transferred onto the inner surface of the pores. A significant cost saving and a much more uniform catalyst deposition comparing with the traditional techniques, are thus obtained. Other active materials such as crystalline seeds, grain growth modifiers, chemicals, and fine ceramic particles of the same or different compositions of the matrix ceramic powder, may be incorporated into the solution either separately or in various combinations. These solution treatments will result in a fully or partially crystallised thin surface around the pores, example being amorphous silicate; a finer or coarser grain sizes within the surface layer of the pores, examples being abrasive ceramic foams and special dielectric components; and a thin surface coating of various chemical compositions and mineral phases, examples being anti-bacterial filters and highly corrosion resistant foams.

The thermoplastic spheres, either being mixed uniformly with the ceramic powder or coated uniformly with the ceramic (if the ceramic powder size is much smaller than the spheres) provide the desired cushioning effect. Our investigations suggest that the cushioning effect be caused by relative sliding movements of the ceramic particles and form a higher packing density. The sliding movements will also promote the relative positioning of the thermoplastic spheres and reduce the macro defects. During extrusion, such sliding is most active as the mixture approaches the extrusion die, resulting in a significant pressure reduction and wear reduction.

The optimum elastic property of the thermoplastic spheres gives the paste an added rubbery effect. The mixture deforms isotropically while being extruded through the extrusion die. The volume of the paste reduced during this period will also reduce the extrusion pressure needed and hence reduced wear. Once passed the extrusion die the paste now a shaped extrudate, will resume its original volume uniformly as a result of which the dimensional accuracy of the extrudate is precisely maintained.

The use of thermoplastic spheres gives an extra way of controlling the rheological behaviour of the paste by adjusting the operation temperature. With increased temperature, the elasticity of the thermoplastic spheres decreases and the mixture becomes less viscous. To maximise the lubricating effect offered by the thermoplastic spheres, it is preferred that the temperature is between room temperature and 60°C, and should not exceed about 80°C.

The use of thermoplastic spheres gives the fired ceramic extrudates pre-selected porosity and pore size. Because of the hydrophilic nature of the spheres these voids are all interconnected with the window sizes up to 30% of the sphere diameters,

Preferably the thermoplastic spheres make up above 20% and more preferably above 30% of the total volume of the paste composition.

Additional agents can be included in the paste to give the fired extrudates added porosity and pore structure. These additional pore formers can be categorised into three groups: macroscopic structural pore formers, microscopic pore structure modifiers, and additional pore formers. By macroscopic structural pore formers we mean the additives will provide channelled structure within the fired extrudates. The strut size of this channel structure will be in the millimetre range between 0.5 and 10, or more preferably between 1 to 6 mm. These macroscopic structural pore formers can be selected from spherical materials such as expanded polystyrene beads, fibres of aspect ratio between 1 to 5 made from polymers or natural materials, and three-dimensional specially designed shapes such as reticulated polyurethane foam pieces and injection moulded thermoplastic spatial patterns. By microscopic pore structure modifiers we mean the additives will provide morphological modification of the existing pores formed by thermoplastic spheres. The major function of the modification is to increase the specific surface area of the extrudates at the microscopic level by adding extra fine pores into the system. The pore size formed for this purpose is in the submicron range between 1 and 1000 nm, and more preferably between 50 and 800 nm. These microscopic structural pore modifiers can be selected from spherical materials such as latex suspensions, chemicals evolving gas at elevated temperatures such as aluminium hydroxide, calcium carbonate and magnesium carbonate. The additional pore formers may be natural organic materials such as ground almond shell, olive stone, coconut shell, and the like. The materials are relatively cheaper than the thermoplastic spheres and give off less environmentally hazardous emissions during firing.

The matrix ceramic powders can be selected from a wide variety of metal oxides, metal oxide compounds, and non-oxide ceramic powders. Examples of ceramic powders suitable for the present application are alumina, aluminium hydroxides, zirconia, silica, titania, aluminosilicates such as mullite, spinel, cordierite, lithium aluminosilicate, sodium zirconium phosphate, fully or partially stabilised zirconia, aluminium titanate, sodium silicate based glass, silicon carbide, silicon nitride; mineral based ceramic powders such as sillimanite, olivine, china clay, ball clay, kaolin, forsterite, zircon, kyanite. Mixtures of several ceramic powders of different chemical and/or mineral compositions are also suitable for the present invention. Specific examples of the mixtures of several chemical compositions or minerals are: (a) alumina and sillimanite (or other low alumina content aluminosilicate) to form mullite or alumina rich aluminosilicate; and (b) reactive mixtures of materials such as molochite, silica, magnesium carbonate and ball clay to form pseudo-cordierite.

The binders may be any substance suitable for the purpose of giving a high green strength of the extrudates once the liquid medium is removed. Examples include organic binders such as polyvinyl alcohol, polyvinyl acetate, polyethylene glycol, polysaccarides, cellulose derivatives, agar, starches, flours and gelatins; inorganic binders such as clays, kaolin, colloidal silica and colloidal alumina, fine aluminium hydroxides, and cement.

The dispersants may be any substance suitable for the purpose of dispersing the ceramic powders to form a homogeneous suspension. Electrosteric dispersants, especially polyelectrolytes, are preferred in the present invention although other types of dispersants may also be used. The polyelectrolytes disperse the suspension in two mechanisms: electrostatic and steric dispersions. When the ceramic particles in the suspension are electrostatically charged by addition of electrolytes the electrostatic repulsive force will repel the adjacent particles of the same charge. This type of dispersion effect can be easily manipulated by changing pH or salt concentration of the suspension. The steric dispersion develops if a polymer layer is adsorbed onto the particle surface and the thickness of the polymer layer is larger than the It is preferred that the thermoplastic spheres are somewhat hydrophilic, that is, the spheres can be easily wetted and may absorb a slight amount of water. This wettability significantly improves the uniform distribution of spheres within the ceramic paste. Surface activity treatment may be necessary if the spheres selected are hydrophobic. One example of such surface activity treatment is to coat the thermoplastic spheres with aqueous aluminium nitrate solution (10 to 20% concentration). Once coated with the nitrate the thermoplastic spheres will have the similar surface properties to those of alumina. The changes of suspension pH or the addition of salts do not affect this type of dispersion. The advantage of using polyelestrolytes as dispersants in the present invention is that the ceramic powders can be easily and uniformly mixed to form a ceramic suspension at low viscosity and subsequently the suspension can be easily coagulated into a high viscosity paste by the removal of the electrostatic charges. Ammonium polyacrylate and ammonium polymethacrylate are two preferred dispersants which are commercially available.

A coagulant in this context means a substance that either changes the pH of the suspension or releases ions to neutralise the charges of the polyelectrolytes. The direction of pH change should be towards the point of zero charge at which the dispersing effect by electrostatic force disappears completely. Information on point of zero charge for ceramic powders and polyelectrolytes can usually be obtained from the manufacturer. Coagulants suitable for use in the present invention are mineral acids and alkalines such as hydrochloric acid, nitric acid, potassium hydroxide, ammonia; organic acids and bases such as various carboxylic acids and amines; time delayed coagulants by temperature sensitive hydrolysis or decomposition such as carboxylic lactones and lactides, and ureas; various salts such as chlorides and nitrates of ammonia, magnesium, calcium, aluminium, and the like.

Small amounts of certain lubricants or oils can also be added to aid the extrusion. The lubricants will further facilitate the 'sliding' movements between the ceramic particles and between the ceramic particle and thermoplastic spheres, and more importantly, reduce the friction between the die walls and the ceramic paste during extrusion. It may also improve the surface finish of the extrudates. The most often used lubricants also suitable for the present invention are glycerol derivatives, silicones, various stearates, graphite powder or colloidal suspension, various petroleum or mineral based oils or oil mixtures.

The amount of liquid medium, e.g. water, needed will depend on the size and size distribution of the ceramic powder, the types and concentrations of dispersants and binders, and the relative volume of thermoplastic spheres, and the effect of coagulants. The optimum amount should therefore be determined by trial and error according to the viscosity, or consistency, of the paste. Typical water concentration, in volume percent, on wet bases, is between 30 and 65. To reduce the shrinkage and defects caused by the capillary force during drying the amount of water added should be carefully controlled and reduced to minimum. The liquid medium is water although use of organic solvents as the liquid medium is not excluded from this invention.

For example, a small amount of sintering aids may be mixed into the paste to enhance the mechanical strength and attrition resistance of the fired porous body. To reduce the tendency of mechanical failure and maintain the specific surface area of the fired porous extrudates a small amount of grain growth inhibitor may also be added. On the other hand, if the content of the cushioning agent produces the desired porosity and pore structure, extra pore formers are then not needed. It is also possible to combine the functions of the binder and dispersant into a single additive by using steric dispersants, or electrosteric dispersants with relatively high molecular weights, say, 3000 and higher. If cellulose derivatives have been used for the solution treatment of the foamed thermoplastic spheres or added to the paste as a binder the addition of coagulant may be reduced or even eliminated. Additional lubricants may not be used if the extrudates are of small diameter, simple cross-sectional profile, or low surface finish requirement.

The concentrations, in weight percent, on dry materials bases, are in the range between 0.1 and 5 for the binders, 0.01 and 5 for dispersants and between 0.01 and 2 for the coagulants. The total concentration of the above mentioned three ingredients should be in the range between 0.1 and 10, preferably in the range between 0.1 and 5. The concentration of additional lubricants may be determined according to the application and should be as low as practically possible.

The method of paste preparation is generally in four steps:
(1) forming a ceramic suspension comprising ceramic powder, a dispersant, a binder, and water and optionally other additives such as lubricants,
(2) mixing any coagulants into the suspension,
(3) surface treating the cushioning agent if required, and
(4) admixing thermoplastics spheres to the mix to form a uniform paste of suitable density and consistency.

The mixing process in the first step may be carried out either by dry mixing the ceramic powder with binders and lubricants before water and dispersants are added or by mixing all the ingredients together. This mixing step is a critical one and all particles must be uniformly coated with the dispersants, binders and water in order to obtain a defect free and consistent product. The mixing can be carried out in any conventional mixing equipment since the viscosity of the mix is very low at this stage, usually less than 5 Pas or more preferably less than 2 Pas.

Coagulants may be added after a uniform suspension with low viscosity is formed. At this stage, the mixing should be carried out in a high shear mixer since the viscosity of the suspension will increase dramatically, usually higher than 5 or even 10 Pas. Mixing should be fairly thorough to avoid any apparent consistency variation within the mixture.

Surface treatment of the cushioning agents may be conducted in two different ways. For the foamed spheres the treated spheres may be used while still wet. For other purposes a gelling material may be needed to 'lock' the chemicals onto the surface of the cushioning agent. One example of such gelling material is polyvinyl acetate. After the treatment the filler materials are dried by means of a fluidised bed or spray drying and the chemical coating will not be easily removed.

The final step is to mix the cushioning agent, *i.e.* thermoplastics spheres, (and additional agents, e.g. pore formers) into the mixture to form the paste. The addition of the thermoplastic spheres and additional pore formers should be gradual and typically in two or three stages. The normal practice is adding the first half into the mixture and mixing for a sufficiently long time before the next quarter is added. An extra mixing time may be needed after the final quarter is added to ensure a uniform paste is prepared.

The paste thus prepared is ready for extrusion. Conventional extrusion equipment without any modification may be used in the present invention. Care must be taken, however, that due to the addition of the buffer fillers the drying, deformation and final profile pattern of the fired extrudates will be slightly different from that of the traditionally extruded products. This factor must be taken into consideration during die design. It is also necessary to know that, because the extrusion pressure is reduced, the extrusion rate will normally increase under the same operation norms.

Drying and firing are performed in the conventional way. The heating rate within the soften melting to burn off temperature should be relatively slow, preferably less than 2°C per minute or more preferably less than 1°C per minute.

Laboratory tests have shown that, using a single orifice 3 mm diameter die design, the pressure needed for extrusion of a fine particulate alumina paste is 0.14-0.16 MPa for the paste without thermoplastic spheres and coagulant, 0.04-0.06 MPa for the paste electrosterically dispersed and coagulated but without thermoplastic spheres, and 0.025 -0.035 MPa for the paste electrosterically dispersed, salt coagulated and with thermoplastic spheres added. Typical results from laboratory tests have shown that, using a single orifice 3 mm diameter die connected to a 25 mm diameter barrel, the force needed for extrusion of a fine particulate alumina paste is 100-120 kN for the paste without cushioning agent and coagulant, 28-32 kN for the past electrosterically dispersed and coagulated but without cushioning agent, and 20-26 kN for the past electrosterically dispersed, salt coagulated and with cushioning agent added. The reduction in extrusion pressure is significant and is around 80% in total in the above example.

Laboratory tests also showed that, using a single 25 mm round die without a mandrel, the pressure needed for extruding the fine particle alumina paste is about 50-70% less than the pressure needed in conventional extrusion, i.e. without the cushioning agent. Depending on the properties of the ceramic powders and the paste compositions, the extrusion pressure reduction ranges between 20 and 80%, normally around 40%, less die wall wear was also observed since with the conventional extrusion black metallic wear marks were always present on the surface of the extrudate but such marks rarely appeared with the paste of the invention. The density of the extrudate was calculated by the volume/ weight relationship and also measured by water absorption. The calculated value was 15.2% of theoretical and the measured one 15.5%. Within experimental error one can confidently say that the pores within the sample are almost 100% interconnected and openly accessible.

The porosity of the ceramic extrudates prepared according to the invention can be easily controlled, and the pores are all interconnected. Taking the 25 mm alumina extrudate described in the previous paragraph as an example, the calculated density of 15.2% of theoretical by volume/mass relationship and the measured 15.5% volume fraction by water absorption agree very well within experimental error. It shows that the pores within the sample are almost 100% interconnected and openly accessible.

Although only extrusion is mentioned in the present description, compositions of the invention can be used in other plastic formation techniques such as injection moulding and pressing. When applying the paste of the present invention to these techniques, allowance must be made for the bouncing back of the pressed articles due to the elastic property of the cushioning agent. The die or mould design should therefore be modified accordingly.

In order that the invention may be well understood it will now be described by way of illustration with reference to the following examples:

### EXAMPLE I

800 gram alumina powder (A16SG, ALCOA, Bauxite, Arkansa, USA), 210 gram water, 5 gram DISPEX A40 (40 wt% aqueous solution of ammonium polyacrylate of average molecular weight 3,500, supplied by Allied Colloids, Bradford, UK), and 3 gram CHEMSOL (polysaccarides guar extract based binder, Chemcolloids Ltd, Cheshire, UK) were mixed to form a homogenous low viscosity dispersion. To this was added 150 gram of thermoplastic hollow spheres having a measured bulk elasticity of about 0.25 MPa. (EXPANCEL 551WE, average particle size 30-50µm, supplied by Akzo Nobel, Sundsvall, Sweden) to form a uniform semi-dry paste. The paste was extruded into prills through a die having plural 3mm-apertures using an auger extruder. The extrusion was easy and smooth.

The extrudates were fired at 4°C per minute to 250°C and held for a short time to bum out the thermoplastic spheres. Heating was then continued at 1°C per minute and held at a sintering temperature of 1550°C for 1 hour followed by furnace cooling. The bulk density of these sintered prills was 0.215 g/ml, (about 6% of its theoretical density) and the micro-density is about 0.55g/ml, (about 14% of the theoretical).

The paste was also pressed into a cylinder of 25mm diameter under low pressure, demoulded and allowed to dry. The firing procedures were the same as above. The linear shrinkage on drying was about 3% and on firing about 17%. Scanning electron microscopy examination showed that the pores are all highly spherical and well interconnected. The interconnecting windows are generally circular and range from about 3 to 12µm, with an average window size 7.8µm.

### COMPARISON EXAMPLE

The same paste was prepared as EXAMPLE I except that the thermoplastic spheres were replaced by 220 gram ground olive stone of -100 mesh having a measured bulk elasticity of more than 5 MPa. Extrusion was found to be much more difficult than that of EXAMPLE I and higher extrusion pressure needed. The fired extrudates were denser and the pores less open.

### EXAMPLE II

1.2 kg of a mixture of molochite, silica powder, ball clay, and magnesium carbonate, making up the combined composition of cordierite, was mixed with Vanisperse CB binder (Borregaard, UK) and a small amount of oil. To this, 200 gram of water and 10 gram PHOSPHOLAN PR13T (polymeric dispersant by Akcros Chemicals, Manchester, UK) were added and mixed to form a thin paste. 130 gram of wet thermoplastic spheres having an average bulk elasticity of about 0.20 MPa, (EXPANCEL 091 WE, Akzo Nobel, Sweden) was mixed into a paste. The resultant mixture was then extruded through a multiaperture die and parted off into 2-3 cm lengths. Extrusion was easy and uniform. These extrudates were dried using flowing hot air and passed into a furnace. The extrudates were fired at 4°C per minute to 250°C and held for 2 hours. Heating was then continued at the same ramp rate until held at 1300°C for 20 minutes. The product had a fired micro-density of 0.8g/cm³ and bulk density of 0.48g/cm³.

### EXAMPLE III

6.4kg china clay was mixed with 2.7 kg water and 10 gram VERSICOL KA11 (Ciba Specialties, UK) and 30 gram DISPEX A40 to form a low viscosity slurry. To this was added 900g of thermoplastic hollow spheres with particle size 60-130 µm and having a bulk density of about 0.19 MPa and the whole was then mixed to form a substantially dry and low-density paste. This was extruded through a multiaperture die and parted to form extrudates approximately 20 mm long. Extrusion was easy and smooth. The extrudates were heated at 2°C per minute to 1200°C and held for 20 minutes. The bulk density of the fired prills is 0.3-0.35 g/cm³.

### EXAMPLE IV

810 gram A16SG alumina powder, 5 gram DISPEX A40, 120 gram water, and 120 gram of thermoplastic hollow sphere average size 0.5 µm suspension ROPAQUE ULTRA (supplied by Rohm and Haas Company, Croydon, UK) were mixed thoroughly to form a low viscosity slurry and allowed to equilibrate for 1 hour. To the slurry were then added 18 gram ammonium chloride, 4 gram methyl cellulose, and 20 gram dry thermoplastic spheres with particle size 60-130 µm. The mixture was then mixed thoroughly to form a thick paste. The paste was extruded fairly easily and the surface finish was good.

### EXAMPLE V

The same paste was prepared as in EXAMPLE IV except that the thermoplastic hollow spheres were replaced by 100g PHENOSET microspheres supplied by Asia Pacific Microspheres SDN BHD, Malaysia, and 60 gram almond shell of -120 mesh size, and 180 gram water was added instead of 120 gram. The average bulk elasticity of the PHENOSET microspheres is 2 MPa. The paste was reasonably extrudable and slightly easier than the paste of COMPARISON 1.

### EXAMPLE VI

The same paste was prepared as in EXAMPLE V except that the thermoplastic hollow spheres were replaced by 120 gram EXPANCEL 091WE. The paste was extruded with lower than normal pressure.

## Claims

1. A method of extruding a ceramic composition in an extruder, the method comprising extruding a paste composition comprising a liquid carrier containing particles of a ceramic material, at least one binder and at least one dispersant and a cushioning agent in the form of thermoplastic spheres having a bulk modulus of elasticity of 0.1 MPa to 4 MPa at an extrusion pressure of below 0.04 MPa, the thermoplastic spheres being present in the range of 10-95 v/v%.

2. A method according to Claim 1, wherein the extrusion pressure is from 0.025 MPa to 0.035 MPa.

3. A method according to Claim 1 or 2, wherein the thermoplastic spheres have a modulus of elasticity of from 0.2 MPa to 1 MPa.

4. A method according to any preceding Claim, wherein the thermoplastic spheres are less than 2 mm in mean diameter.

5. A method according to Claim 4, wherein the thermoplastic spheres have a mean diameter of from about 0.1 to about 500 microns.

6. A method according to Claim 4 or 5, wherein the thermoplastic spheres have a mean diameter of from 5 to 200 microns.

7. A method according to any preceding Claim, wherein the thermoplastic spheres are hollow.

8. A method according to any of Claims 1 to 6, wherein the thermoplastics spheres are foamed thermoplastic polymer.

9. A method according to any preceding Claim, wherein the thermoplastic spheres have a softening point above about 100°C and a melting point which is at least 50°C higher.

10. A method according to Claim 9, wherein the softening point is above 120°C.

11. A method according to Claim 9 or 10, wherein the melting point is at least 80°C above that of the softening point.

12. A method according to any preceding Claim, wherein the thermoplastic spheres have a density of less than 0.1 g/ml.

13. A method according to any preceding Claim, wherein the thermoplastic spheres have a mean diameter of 10 to 200 micron and a bulk density of 0.02 to 0.08 g/ml.

14. A method according to any preceding Claim, wherein the thermoplastic spheres are hydrophilic or have a hydrophilic coating.

15. A method according to any preceding Claim, wherein the thermoplastic spheres are generally isotropic having a modulus of elasticity in the range of about 0.1 to about 4 MPa, a dry bulk density of less than 0.6 g/ml and a softening point of at least 100°C and a melting point which is at least 50°C higher than the softening point.

16. A method of making an extrudable ceramic paste composition, the method comprising forming a substantially homogeneous mixture comprising a liquid carrier, particles of a ceramic material, a binder and a dispersant and a cushioning agent in the form of thermoplastic spheres having a bulk modulus of elasticity of from about 0.1 MPa to about 4 MPa and being present in the range of 10-95 v/v%.

17. A method according to Claim 16, including the step of applying a hydrophilic coating to non-hydrophilic thermoplastic spheres to render them hydrophilic.

18. Use of an extrudable ceramic paste composition comprising a liquid carrier containing ceramic particles, at least one binder and at least one dispersant, and a cushioning agent in the form of thermoplastic spheres having a modulus of elasticity of from about 0.1 MPa to about 4 MPa for extrusion at an extrusion pressure below about 0.04 MPa, the thermoplastic spheres being present in the range of 10-95 v/v% in the composition.

19. Use according to Claim 18, wherein the thermoplastic spheres have a modulus of elasticity of from 0.2 MPa to 1 MPa.

20. An extrudable ceramic paste composition comprising a liquid carrier containing:
• particles of a ceramic material
• at least one binder and at least one dispersant, and
• a cushioning agent in the form of thermoplastic spheres having a bulk modulus of elasticity of about 0.1 MPa to about 4 MPa, the thermoplastic spheres being present in the range of 10-95 v/v%.

21. A composition according to Claim 20, wherein the thermoplastic spheres have a modulus of elasticity of from about 0.2 MPa to about 1 MPa.

22. A composition according to Claim 20 or 21, wherein the thermoplastic spheres are less than 2 mm in mean diameter.

23. A composition according to any of Claims 20 to 22, wherein the thermoplastic spheres have a mean diameter of from about 0.1 to about 500 microns.

24. A composition according to Claim 22 or 23, wherein the thermoplastic spheres have a mean diameter of from 5 to 200 microns.

25. A composition according to any of Claims 20 to 24, wherein the thermoplastic spheres are hollow.

26. A composition according to any of Claims 20 to 24, wherein the thermoplastic spheres are foamed thermoplastic polymer.

27. A composition according to any of Claims 20 to 26, wherein the thermoplastic spheres have a softening point above about 100°C and a melting point which is at least 50°C higher.

28. A composition according to Claim 27, wherein the softening point is above 120°C.

29. A composition according to Claim 27 or 28, wherein the melting point is at least 80°C above that of the softening point.

30. A composition according to any of Claims 20 to 29, wherein the thermoplastic spheres have a density of less than 0.1 g/ml.

31. A composition according to any of Claims 20 to 30, wherein the thermoplastic spheres have a mean diameter of 10 to 200 micron and a bulk density of 0.02 to 0.08 g/ml.

32. A composition according to any of Claims 20 to 31, wherein the thermoplastic spheres are hydrophilic or have a hydrophilic coating.

33. A composition according to any of Claims 20 to 32, wherein the thermoplastic spheres are generally isotropic, having a modulus of elasticity in the range of about 0.1 to about 4 MPa, a dry bulk density of less than 0.6 g/ml and a softening point of at least 100°C and a melting point which is at least 50°C higher than the softening point.

## Patentansprüche

1. Verfahren zum Extrudieren einer keramischen Zusammensetzung in einem Extruder, wobei das Verfahren umfasst das Extrudieren bei einem Extrusionsdruck von unter 0,04 MPa einer Pastenzusammensetzung, umfassend einen flüssigen Träger, der Partikel eines keramischen Materials, mindestens ein Bindemittel und mindestens ein Dispergiermittel und ein Dämpfungsmittel in Form thermoplastischer Sphären mit einem Volumenelastizitätsmodul von 0,1 MPa bis 4 MPa enthält, wobei die thermoplastischen Sphären in einem Bereich von 10 bis 95 % Vol./Vol. vorliegen.

2. Verfahren nach Anspruch 1, wobei der Extrusionsdruck 0,025 MPa bis 0,035 MPa beträgt.

3. Verfahren nach Anspruch 1 oder 2, wobei die thermoplastischen Sphären einen Elastizitätsmodul von 0,2 MPa bis 1 MPa aufweisen.

4. Verfahren nach irgendeinem vorhergehenden Anspruch, wobei die thermoplastischen Sphären einen mittleren Durchmesser von weniger als 2 mm aufweisen.

5. Verfahren nach Anspruch 4, wobei die thermoplastischen Sphären einen mittleren Durchmesser von etwa 0,1 bis etwa 500 Mikron aufweisen.

6. Verfahren nach Anspruch 4 oder 5, wobei die thermoplastischen Sphären einen mittleren Durchmesser von 5 bis 200 Mikron aufweisen.

7. Verfahren nach irgendeinem vorhergehenden Anspruch, wobei die thermoplastischen Sphären hohl sind.

8. Verfahren nach irgendeinem der Ansprüche 1 bis 6, wobei die thermoplastischen Sphären ein geschäumtes thermoplastisches Polymer darstellen.

9. Verfahren nach irgendeinem vorhergehenden Anspruch, wobei die thermoplastischen Sphären einen Erweichungspunkt oberhalb von etwa 100°C und einen Schmelzpunkt, der mindestens 50°C höher liegt, aufweisen.

10. Verfahren nach Anspruch 9, wobei der Erweichungspunkt oberhalb von 120°C liegt.

11. Verfahren nach Anspruch 9 oder 10, wobei der Schmelzpunkt mindestens 80°C über dem Erweichungspunkt liegt.

12. Verfahren nach irgendeinem vorhergehenden Anspruch, wobei die thermoplastischen Sphären eine Dichte von weniger als 0,1 g/ml aufweisen.

13. Verfahren nach irgendeinem vorhergehenden Anspruch, wobei die thermoplastischen Sphären einen mittleren Durchmesser von 10 bis 200 Mikron und eine Schüttdichte von 0,02 bis 0,08 g/ml aufweisen.

14. Verfahren nach irgendeinem vorhergehenden Anspruch, wobei die thermoplastischen Sphären hydrophil sind oder eine hydrophile Beschichtung aufweisen.

15. Verfahren nach irgendeinem vorhergehenden Anspruch, wobei die thermoplastischen Sphären im Allgemeinen isotrop sind und einen Elastizitätsmodul im Bereich von etwa 0,1 bis etwa 4 MPa, eine Trockenschüttdichte von weniger als 0,6 g/ml und einen Erweichungspunkt von mindestens 100°C und einen Schmelzpunkt, der mindestens 50°C höher als der Erweichungspunkt liegt, aufweisen.

16. Verfahren zur Herstellung einer extrudierbaren keramischen Pastenzusammensetzung, wobei das Verfahren umfasst das Bilden einer im Wesentlichen homogenen Mischung, umfassend einen flüssigen Träger, Partikel eines keramischen Materials, ein Bindemittel und ein Dispergiermittel und ein Dämpfungsmittel in Form thermoplastischer Sphären, die einen Volumenelastizitätsmodul von etwa 0,1 MPa bis etwa 4 MPa aufweisen und die in einem Bereich von 10 bis 95 % Vol./Vol. vorliegen.

17. Verfahren nach Anspruch 16, umfassend den Schritt der Aufbringung einer hydrophilen Beschichtung auf nicht-hydrophile thermoplastische Sphären, um sie hydrophil zu machen.

18. Verwendung einer extrudierbaren keramischen Pastenzusammensetzung, umfassend einen flüssigen Träger, der keramische Partikel, mindestens ein Bindemittel und mindestens ein Dispergiermittel und ein Dämpfungsmittel in Form thermoplastischer Sphären mit einem Elastizitätsmodul von etwa 0,1 MPa bis etwa 4 MPa enthält, zur Extrusion bei einem Extrusionsdruck unter etwa 0,04 MPa, wobei die thermoplastischen Sphären in einem Bereich von 10 bis 95 % Vol./Vol. in der Zusammensetzung vorliegen.

19. Verwendung nach Anspruch 18, wobei die thermoplastischen Sphären einen Elastizitätsmodul von 0,2 MPa bis 1 MPa aufweisen.

20. Extrudierbare keramische Pastenzusammensetzung, umfassend einen flüssigen Träger, der enthält:
• Partikel eines keramischen Materials
• mindestens ein Bindemittel und mindestens ein Dispergiermittel, und
• ein Dämpfungsmittel in Form thermoplastischer Sphären mit einem Volumenelastizitätsmodul von etwa 0,1 MPa bis etwa 4 MPa, wobei die thermoplastischen Sphären in einem Bereich von 10 bis 95 % Vol./Vol. vorliegen.

21. Zusammensetzung nach Anspruch 20, wobei die thermoplastischen Sphären einen Elastizitätsmodul von etwa 0,2 MPa bis etwa 1 MPa aufweisen.

22. Zusammensetzung nach Anspruch 20 oder 21, wobei die thermoplastischen Sphären einen mittleren Durchmesser von weniger als 2 mm aufweisen.

23. Zusammensetzung nach irgendeinem der Ansprüche 20 bis 22, wobei die thermoplastischen Sphären einen mittleren Durchmesser von etwa 0,1 bis etwa 500 Mikron aufweisen.

24. Zusammensetzung aus Anspruch 22 oder 23, wobei die thermoplastischen Sphären einen mittleren Durchmesser von 5 bis 200 Mikron aufweisen.

25. Zusammensetzung nach irgendeinem der Ansprüche 20 bis 24, wobei die thermoplastischen Sphären hohl sind.

26. Zusammensetzung nach irgendeinem der Ansprüche 20 bis 24, wobei die thermoplastischen Sphären ein geschäumtes thermoplastisches Polymer darstellen.

27. Zusammensetzung nach irgendeinem der Ansprüche 20 bis 26, wobei die thermoplastischen Sphären einen Erweichungspunkt oberhalb von etwa 100°C und einen Schmelzpunkt, der mindestens 50°C höher liegt, aufweisen.

28. Zusammensetzung nach Anspruch 27, wobei der Erweichungspunkt oberhalb von 120°C liegt.

29. Zusammensetzung nach Anspruch 27 oder 28, wobei der Schmelzpunkt mindestens 80°C über dem Erweichungspunkt liegt.

30. Zusammensetzung nach irgendeinem der Ansprüche 20 bis 29, wobei die thermoplastischen Sphären eine Dichte von weniger als 0,1 g/ml aufweisen.

31. Zusammensetzung nach irgendeinem der Ansprüche 20 bis 30, wobei die thermoplastischen Sphären einen mittleren Durchmesser von 10 bis 200 Mikron und eine Schüttdichte von 0,02 bis 0,08 g/ml aufweisen.

32. Zusammensetzung nach irgendeinem der Ansprüche 20 bis 31, wobei die thermoplastischen Sphären hydrophil sind oder eine hydrophile Beschichtung aufweisen.

33. Zusammensetzung nach irgendeinem der Ansprüche 20 bis 32, wobei die thermoplastischen Sphären im Allgemeinen isotrop sind, einen Elastizitätsmodul im Bereich von etwa 0,1 bis etwa 4 MPa, eine Trockenschüttdichte von weniger als 0,6 g/ml und einen Erweichungspunkt von mindestens 100°C und einen Schmelzpunkt, der mindestens 50°C höher als der Erweichungspunkt liegt, aufweisen.

## Revendications

1. Procédé d'extrusion d'une composition céramique dans une extrudeuse, le procédé comprenant l'extrusion d'une composition de pâte qui comprend un support liquide qui contient des particules d'un matériau céramique, au moins un liant et au moins un agent dispersant et un agent d'amortissement sous forme de sphères thermoplastiques qui ont un module d'élasticité volumique de 0,1 MPa à 4 MPa à une pression d'extrusion inférieure à 0,04 MPa, les sphères thermoplastiques étant présentes dans la plage allant de 10 à 95 %v/v.

2. Procédé selon la revendication 1, dans lequel la pression d'extrusion est de 0,025 MPa à 0,035 MPa.

3. Procédé selon la revendication 1 ou 2, dans lequel les sphères thermoplastiques ont un module d'élasticité allant de 0,2 MPa à 1 MPa.

4. Procédé selon l'une quelconque des revendications précédentes, dans lequel les sphères thermoplastiques ont un diamètre moyen inférieur à 2 mm.

5. Procédé selon la revendication 4, dans lequel les sphères thermoplastiques ont un diamètre moyen allant d'environ 0,1 à environ 500 microns.

6. Procédé selon la revendication 4 ou 5, dans lequel les sphères thermoplastiques ont un diamètre moyen allant de 5 à 200 microns.

7. Procédé selon l'une quelconque des revendications précédentes, dans lequel les sphères thermoplastiques sont creuses.

8. Procédé selon l'une quelconque des revendications précédentes 1 à 6, dans lequel les sphères thermoplastiques sont de polymère thermoplastique expansé.

9. Procédé selon l'une quelconque des revendications précédentes, dans lequel les sphères thermoplastiques ont un point de ramollissement supérieur à environ 100°C et un point de fusion qui est au moins plus élevé de 50°C.

10. Procédé selon la revendication 9, dans lequel le point de ramollissement est supérieur à 120°C.

11. Procédé selon la revendication 9 ou 10, dans lequel le point de fusion est au moins 80°C au-dessus de celui du point de ramollissement.

12. Procédé selon l'une quelconque des revendications précédentes, dans lequel les sphères thermoplastiques ont une densité inférieure à 0,1 g/ml.

13. Procédé selon l'une quelconque des revendications précédentes, dans lequel les sphères thermoplastiques ont un diamètre moyen de 10 à 200 microns et une densité apparente de 0,02 à 0,08 g/ml.

14. Procédé selon l'une quelconque des revendications précédentes, dans lequel les sphères thermoplastiques sont hydrophiles ou ont un revêtement hydrophile.

15. Procédé selon l'une quelconque des revendications précédentes, dans lequel les sphères thermoplastiques sont généralement isotropes ayant un module d'élasticité dans la plage allant d'environ 0,1 à environ 4 MPa, une densité apparente à sec inférieure à 0,6 g/ml et un point de ramollissement d'au moins 100°C et un point de fusion qui est au moins 50°C au-dessus du point de ramollissement.

16. Procédé de fabrication d'une composition de pâte céramique extrudable, le procédé comprenant la formation d'un mélange sensiblement homogène qui comprend un support liquide, des particules d'un matériau céramique, un liant et un agent dispersant et un agent d'amortissement sous forme de sphères thermoplastiques qui ont un module d'élasticité volumique allant d'environ 0,1 MPa à environ 4 MPa et sont présentes dans la plage allant de 10 à 95 %v/v.

17. Procédé selon la revendication 16, comprenant l'étape consistant à appliquer un revêtement hydrophile à des sphères thermoplastiques non-hydrophiles pour les rendre hydrophiles.

18. Utilisation d'une composition de pâte céramique extrudable qui comprend un support liquide qui contient des particules céramiques, au moins un liant et au moins un agent dispersant, et un agent d'amortissement sous forme de sphères thermoplastiques qui ont un module d'élasticité allant d'environ 0,1 MPa à environ 4 MPa pour l'extrusion à une pression d'extrusion inférieure à environ 0,04 MPa, les sphères thermoplastiques étant présentes dans la plage allant de 10 à 95 %v/v dans la composition.

19. Utilisation selon la revendication 18, dans laquelle les sphères thermoplastiques ont un module d'élasticité allant de 0,2 MPa à 1 MPa.

20. Composition de pâte céramique extrudable comprenant un support liquide qui contient :
• des particules d'un matériau céramique
• au moins un liant et au moins un agent dispersant, et
• un agent d'amortissement sous forme de sphères thermoplastiques qui ont un module d'élasticité volumique d'environ 0,1 MPa à environ 4 MPa, les sphères thermoplastiques étant présentes dans la plage allant de 10 à 95 %v/v.

21. Composition selon la revendication 20, dans laquelle les sphères thermoplastiques ont un module d'élasticité allant d'environ 0,2 MPa à environ 1 MPa.

22. Composition selon la revendication 20 ou 21, dans laquelle les sphères thermoplastiques ont un diamètre moyen inférieur à 2 mm.

23. Composition selon l'une quelconque des revendications précédentes 20 à 22, dans laquelle les sphères thermoplastiques ont un diamètre moyen allant d'environ 0,1 à environ 500 microns.

24. Composition selon la revendication 22 ou 23, dans laquelle les sphères thermoplastiques ont un diamètre moyen allant de 5 à 200 microns.

25. Composition selon l'une quelconque des revendications précédentes 20 à 24, dans laquelle les sphères thermoplastiques sont creuses.

26. Composition selon l'une quelconque des revendications précédentes 20 à 24, dans laquelle les sphères thermoplastiques sont de polymère thermoplastique expansé.

27. Composition selon l'une quelconque des revendications précédentes 20 à 26, dans laquelle les sphères thermoplastiques ont un point de ramollissement supérieur à environ 100°C et un point de fusion qui est au moins plus élevé de 50°C.

28. Composition selon la revendication 27, dans laquelle le point de ramollissement est supérieur à 120°C.

29. Composition selon la revendication 27 ou 28, dans laquelle le point de fusion est au moins 80°C au-dessus de celui du point de ramollissement.

30. Composition selon l'une quelconque des revendications précédentes 20 à 29, dans laquelle les sphères thermoplastiques ont une densité inférieure à 0,1 g/ml.

31. Composition selon l'une quelconque des revendications précédentes 20 à 30, dans laquelle les sphères thermoplastiques ont un diamètre moyen de 10 à 200 microns et une densité apparente de 0,02 à 0,08 g/ml.

32. Composition selon l'une quelconque des revendications précédentes 20 à 31, dans laquelle les sphères thermoplastiques sont hydrophiles ou ont un revêtement hydrophile.

33. Composition selon l'une quelconque des revendications précédentes 20 à 32, dans laquelle les sphères thermoplastiques sont généralement isotropes, ayant un module d'élasticité dans la plage allant d'environ 0,1 à environ 4 MPa, une densité apparente à sec inférieure à 0,6 g/ml et un point de ramollissement d'au moins 100°C et un point de fusion qui est au moins 50°C au-dessus du point de ramollissement.
